# EUROPEAN PATENT APPLICATION

(11) **EP 4 794 154 A1**
(43) Date of publication of application: **19.08.2026**
(21) Application number: 23955530.3
(22) Date of filing: 11.10.2023
(51) Int. Cl.: H02J 3/24, H02S 40/32, H02J 3/36

(54) **SYSTEM AND METHOD FOR CONTROLLING GRID FORMING TYPE OUTPUT LIMIT**

(71) Applicant: Pion Electric Co., Ltd., Gwangmyeong-si, Gyeonggi-do 14348 (KR)
(72) Inventor: KANG, Ji Seong, Incheon 22754 (KR)
(74) Representative: M. Zardi & Co S.A.
(86) International application number: PCT/KR2023/015554
(87) International publication number: WO 2025/079743

(57) **Abstract**

A grid-forming type curtailment control system and method linked with a photovoltaic (PV) inverter are provided. The invention enables inertia control, which is unavailable in conventional PV inverters, by linking with a grid-forming inverter to achieve more sustainable inertia control. The system effectively manages and utilizes existing PV inverter facilities to improve power system stability during curtailment or grid disturbances

## Description

### Technical Field

The present invention relates to a technology for controlling curtailment of photovoltaic (PV) power generation. More particularly, the present invention relates to a grid-forming curtailment control system and a method thereof associated with a photovoltaic inverter.

### Background Art

In accordance with global carbon reduction policies, the integration of renewable energy sources is increasing while conventional thermal power plants are being phased out. However, the proliferation of inverter-based resources (IBRs) for converting renewable energy has led to "weak grid" issues, where the ability of the power grid to maintain stable voltage and frequency is significantly diminished.

As the penetration of renewable energy increases, the overall robustness and inertia of the power system continue to decline, requiring more advanced control strategies to ensure grid stability.

Regarding these technical demands, a background technology of the present invention is disclosed in Korean Patent Registration No. 10-2320750. While such existing technologies attempt to address grid issues, there remain significant practical challenges, particularly in responding to curtailment orders in a cost-effective and technically feasible manner.

### Challenges in Curtailment Response

When a photovoltaic (PV) power plant receives a curtailment order due to oversupply or grid instability, several conventional countermeasures may be employed. However, each of these measures presents distinct limitations that hinder effective grid management.

For instance, although excess energy can be stored in batteries via Energy Storage Systems (ESS), such an approach is only feasible if high-cost ESS infrastructure is already installed. Consequently, it is not a viable or cost-effective solution for existing plants that lack such pre-installed facilities.

Another conventional method involves power derating, where the plant operates at a reduced output. However, this is typically only possible with "smart inverters" based on current-source control. Since the majority of currently installed PV inverters lack the functional capability to operate in this mode, this approach has limited applicability.

Lastly, while shutting down the plant is often the only practical option available under current technical constraints, it results in the total loss of energy sales during the shutdown period. This leads to direct and significant economic damage to the plant owners, creating a barrier to efficient renewable energy integration.

### Summary of the Invention

Accordingly, it is an object of the present invention to provide a grid-forming type curtailment control system and a method thereof, which can effectively stabilize a power grid and manage power curtailment by integrating a photovoltaic (PV) inverter with a grid-forming (GFM) inverter.

In accordance with an aspect of the present invention, there is provided a grid-forming type curtailment control system comprising: a photovoltaic inverter (100) configured to convert direct current (DC) electricity generated by a photovoltaic panel into alternating current (AC) electricity; and a grid-forming inverter (200) linked in parallel with the photovoltaic inverter (100) and configured to perform voltage source control on a power grid.

The system may further comprise a DC link device (300) connecting the photovoltaic inverter (100) and the grid-forming inverter (200). The DC link device (300) is configured to open a switch to disconnect the photovoltaic inverter (100) from the grid-forming inverter (200) when a DC voltage of the grid-forming inverter (200) is higher than a DC voltage of the photovoltaic inverter (100), and close the switch to connect the photovoltaic inverter (100) to the grid-forming inverter (200) when the DC voltage of the grid-forming inverter (200) is lower than the DC voltage of the photovoltaic inverter (100).

According to another feature of the invention, the system further comprises an energy storage device (400) connected to the grid-forming inverter (200) and configured to release stored energy through the grid-forming inverter (200) when a disturbance occurs in the power grid.

In one embodiment, the grid-forming inverter (200) comprises: a grid-forming communication unit (210) configured to receive a power system trip signal of the photovoltaic inverter (100) due to a power grid disturbance or a power curtailment command for the PV power generation; and a grid-forming control unit (220) configured to perform control corresponding thereto when the power system trip signal or the curtailment command is received.

When receiving the power system trip signal of the photovoltaic inverter (100) due to a power grid disturbance, the grid-forming control unit (220) may be configured to control the output of the photovoltaic panel at a predetermined DC voltage set point (330, 340) through a DC link with the photovoltaic panel.

Furthermore, upon receiving a power curtailment command for the PV power plant from an external source, the grid-forming control unit (220) of the present invention may be configured to control the output of the photovoltaic panel at a point deviating from a maximum power point (320) through a DC link with the photovoltaic panel.

In another embodiment, the grid-forming control unit (220) is configured to, upon receiving an urgent curtailment command or determining that curtailment is required for system stabilization, increase an AC output voltage at a connection point with the power grid to trip the PV inverter (100) from the power system.

In accordance with another aspect of the present invention, there is provided a grid-forming type curtailment control method performed in a grid-forming type curtailment control system comprising a photovoltaic inverter (100) and a grid-forming inverter (200) linked in parallel, the method comprising: receiving (S405, S815), by the grid-forming inverter (200), a power system trip signal of the photovoltaic inverter (100) due to a power grid disturbance or a power curtailment command for the PV power generation; and performing (S425, S820), upon receiving the power system trip signal or the curtailment command, control corresponding thereto.

The method may further include a step of connecting the photovoltaic inverter and the grid-forming inverter by turning on a switch of a DC coupling device, provided that a DC voltage of the grid-forming inverter is lower than a DC voltage of the photovoltaic inverter; and a step of controlling an output of a **PV** power plant at a predetermined DC voltage set point by DC-coupling the grid-forming inverter with the **PV** power plant.

In addition, the method may include a step of receiving a power curtailment command for pv power generation; and a step of tripping the photovoltaic inverter from a power system by increasing an AC output voltage to a power grid, by the grid-forming inverter, in case of receiving the power curtailment command for the pv power generation.

### Brief Description of the Drawings

FIG. 1 is a schematic diagram illustrating a grid-forming curtailment control system according to an embodiment of the present invention.
FIG. 2 is a block diagram of a grid-forming inverter interfaced with a photovoltaic (PV) inverter according to an embodiment of the present invention.
FIG. 3 is a graph showing the relationship between power output and voltage of photovoltaic power generation according to an embodiment of the present invention.
FIG. 4 and FIG. 5 are diagrams for explaining a grid-forming curtailment control method according to a first embodiment of the present invention.
FIG. 6 and FIG. 7 are diagrams for explaining a grid-forming curtailment control method according to a second embodiment of the present invention.
FIG. 8 and FIG. 9 are diagrams for explaining a grid-forming curtailment control method according to a third embodiment of the present invention.
FIG. 10 is a diagram illustrating simulation results of the grid-forming curtailment control according to the first embodiment.
FIG. 11 and FIG. 12 are diagrams illustrating simulation results of the grid-forming curtailment control according to the second embodiment.
FIG. 13 is a diagram illustrating simulation results of the grid-forming curtailment control according to the third embodiment.

### Detailed Description

Various modifications may be made to the present invention, and the present invention may have various embodiments. Particular embodiments will be illustrated in the drawings and described in detail in the detailed description. However, this is not intended to limit the present invention to specific embodiments, and it should be understood that the present invention includes all modifications, equivalents, or substitutes included in the spirit and technical scope of the present invention. In describing the present invention, if it is determined that a detailed description of a related known technology may unnecessarily obscure the gist of the present invention, the detailed description thereof will be omitted. In addition, singular expressions used in the present specification and claims are to be interpreted as meaning "one or more" unless otherwise specified.

Hereinafter, the present invention will be described with reference to the accompanying drawings. However, the present invention may be implemented in many different forms and is not limited to the embodiments described herein. In the drawings, parts irrelevant to the description are omitted to clearly describe the present invention, and similar reference numerals are assigned to similar parts throughout the specification.

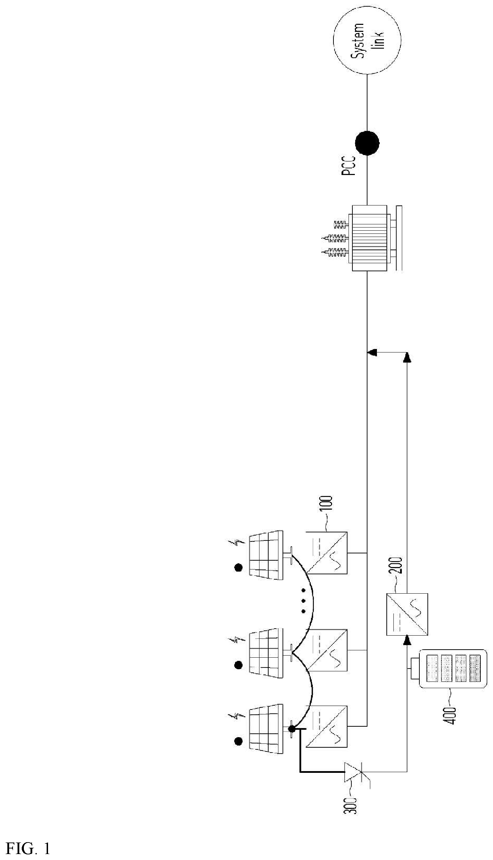

FIG. 1 is a diagram for explaining a grid-forming curtailment control system according to an embodiment of the present invention.

Referring to FIG. 1, the grid-forming curtailment control system includes a photovoltaic (PV) inverter (100), a grid-forming inverter (200), a DC Link device (300), and an energy storage system (ESS) (400).

The PV inverter (100) converts DC power generated from a PV panel into AC power. The PV inverter (100) transmits maximum power to the grid through a Maximum Power Point Tracking (MPPT) algorithm according to the output characteristics of the PV panel. If the PV inverter (100) does not perform MPPT control, the DC voltage remains at a Open Circuit Voltage (Voc) point, and if this point is maintained, only a small amount of current flows. Accordingly, the PV inverter (100) starts DC voltage control from the maximum voltage point. Since the initial start of the PV inverter (100) is at the maximum voltage, it checks the amount of power generation while performing an operation to reduce the DC voltage. If the power generation continues to increase, the PV inverter (100) continues to decrease the DC voltage. The PV inverter (100) may decrease the DC voltage by increasing the duty ratio of PWM switching. Here, the duty ratio of PWM switching refers to the ratio of the switch being turned ON to being turned OFF.

The grid-forming inverter (200) is connected in parallel with the PV inverter (100) to provide stability to the power grid through voltage source control and can avoid additional output curtailment of the PV power plant. When a grid disturbance occurs and the PV inverter (100) is tripped (disconnected) from the power grid, the grid-forming inverter (200) can continue the output of PV power generation through a DC connection. When receiving an output curtailment command from the outside, the grid-forming inverter (200) can lower the output of the PV power plant by operating the PV power plant at a point deviating from the maximum power point through the DC connection.

Furthermore, when receiving an urgent output curtailment command from the outside or determining that output curtailment is necessary for grid stabilization, the grid-forming inverter (200) may respond to the output curtailment by intentionally tripping the PV inverter (100) from the power grid by increasing the AC output voltage. In this case, the grid-forming inverter (200) does not establish a DC connection with the PV panel. The grid-forming inverter (200) can be applied to a new PV power plant or an existing PV power plant.

Since the grid-forming inverter (200) generates voltage by itself, inertia control is possible during grid frequency fluctuations. The PV inverter (100) has a problem in that inertia control is not possible. At the same time, if the PV inverter is tripped from the power grid during grid frequency fluctuations, problems arise such as the spread of supply-demand imbalance in the neighboring area, significant delays in grid reconnection after the trip, degradation of sales revenue for power generation operators, and inability to utilize energy generated from PV panels. Considering that it takes at least several minutes for the PV inverter (100) to be reconnected after being tripped from the power grid, the grid-forming inverter (200) receives energy generated from the PV power plant when the PV inverter (100) is tripped, allowing inertia control to be maintained for a long time even during grid frequency fluctuations due to the voltage drop of the energy storage system (400). Thus, reliability, continuity, and flexibility for the grid can be provided.

The DC Link device (300) connects the output DC circuit of the PV power plant and the input DC circuit of the grid-forming inverter (200) through a switch. After receiving the output curtailment command, the DC Link device (300) may reduce the power plant output through grid-forming control via DC connection (switch ON). The DC Link device (300) may be, for example, a diode, a thyristor, or the like, and may employ one or more methods among a direct connection method, a diode connection method, a thyristor connection method, and a DC/DC converter connection. The switch may be inserted into the positive (+) circuit and the negative (-) circuit, respectively.

The DC Link device (300) is in an open (switch OFF) state when the DC voltage of the grid-forming inverter (200) is formed higher than the DC voltage of the PV inverter (100) during normal state control in a structure connected in parallel with the PV inverter (100). In addition, the DC Link device (300) is switched to a conducting (switch ON) state when the DC voltage of the grid-forming inverter (200) is formed lower than the DC voltage of the PV inverter (100) when the PV inverter (100) is tripped from the grid.

The energy storage system (400) stores energy and, when a disturbance occurs in the power grid, discharges the stored energy through the grid-forming inverter (200). The energy storage system (400) can help restore grid stability by discharging energy to the grid. The energy storage system (400) may use, for example, a supercapacitor, a battery, etc., but is not limited thereto.

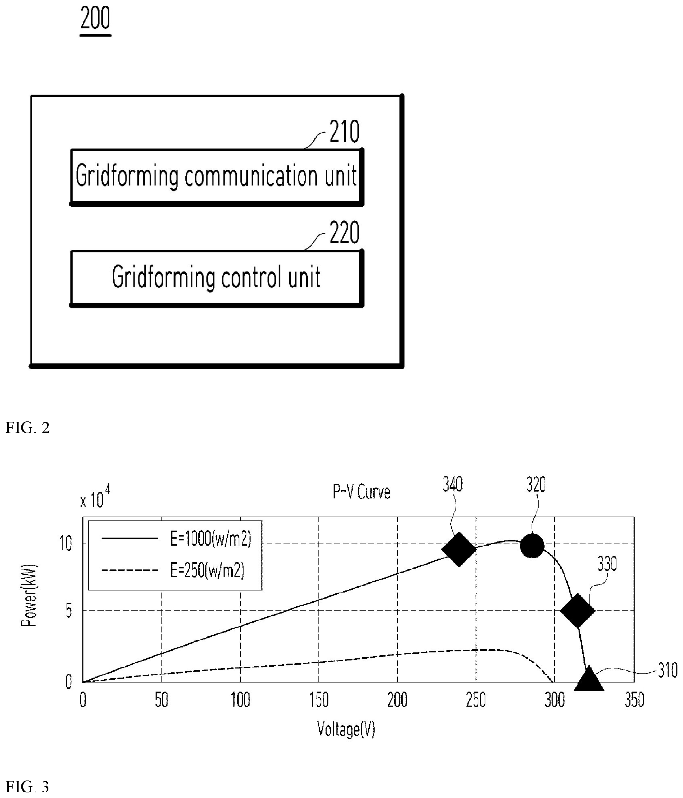

FIG. 2 is a block diagram of a grid-forming inverter coupled with a photovoltaic (PV) inverter according to an embodiment of the present invention.

Referring to FIG. 2, the grid-forming inverter (200) includes a grid-forming communication unit (210) and a grid-forming control unit (220).

The grid-forming communication unit (210) is configured to receive a grid disconnection signal of the PV inverter (100) caused by a grid disturbance or a power curtailment command for the PV power generation.

The grid-forming control unit (220) performs a grid-forming control corresponding to the case where the grid-forming communication unit (210) receives the grid disconnection signal of the PV inverter (100) or the power curtailment command for the PV power generation due to the grid disturbance.

More specifically, when receiving the grid disconnection signal of the PV inverter (100) due to a grid disturbance, the grid-forming control unit (220) is configured to control the output of the PV power plant through a DC linkage with the PV power plant at a predetermined DC voltage set point. By operating at a point deviating from the Maximum Power Point (MPP) (320), the PV power plant can continue to maintain its output.

Furthermore, when receiving a power curtailment command for the PV power plant from an external source, the grid-forming control unit (220) can reduce the output of the PV power plant by operating at a point deviating from the MPP through the DC linkage with the PV inverter (100).

In addition, when the grid-forming control unit (220) receives an emergency power curtailment command or determines that power curtailment is necessary for grid stabilization, it can intentionally trip the PV inverter (100) from the power grid by increasing the AC output voltage of the grid-forming inverter (200) above an overvoltage relay (OVR) trip setting value of the PV inverter, thereby complying with the curtailment requirement.

FIG. 3 is a diagram illustrating the relationship between the output of the PV power generation and the DC voltage according to an embodiment of the present invention.

Referring to FIG. 3, the grid-forming type power curtailment control system according to the present invention transmits maximum generation power to the grid through a Maximum Power Point Tracking (MPPT) algorithm. The system performs MPPT control to track the MPP (320) as the power generation increases starting from the Open Circuit Voltage (Voc)point (310).

According to the present invention, when a grid disturbance occurs and the PV inverter (100) trips from the power grid, the DC Link device (300) switches from an open state to a conducting state, thereby connecting the grid-forming inverter (200) to the PV power plant. Subsequently, the output of the PV power plant is controlled by the grid-forming inverter (200) at a DC voltage set point (330 or 340). Consequently, the PV power plant can operate at a point deviating from the MPP (320). Although this reduces the output of the PV power plant, it allows the PV power plant to continue its output even while the PV inverter (100) is disconnected from the grid.

The DC voltage set point of the grid-forming inverter (200) according to the present invention can be classified into three types:
1. **Normal DC Voltage Set Point:** Maintains the DC circuits in a separated state and retains maximum inertial energy according to the formula P=1/2CV^2
2. **Adjusted DC Voltage Set Point upon PV Inverter (100) Trip:** Since the MPP (320) varies depending on the irradiance, the DC voltage is gradually decreased until the DC Link device (300) completes conduction. Once conduction is established, the voltage is lowered to a level (330 or 340) that does not exceed the open-circuit voltage (Voc)(310) of the PV DC circuit.
3. **Curtailment DC Voltage Set Point:** After receiving a power curtailment command, the DC voltage is decreased to achieve DC circuit conduction for power curtailment. Once conduction is established, the voltage is adjusted (330 or 340) within a range not exceeding the open-circuit voltage (Voc)(310) of the PV DC circuit.

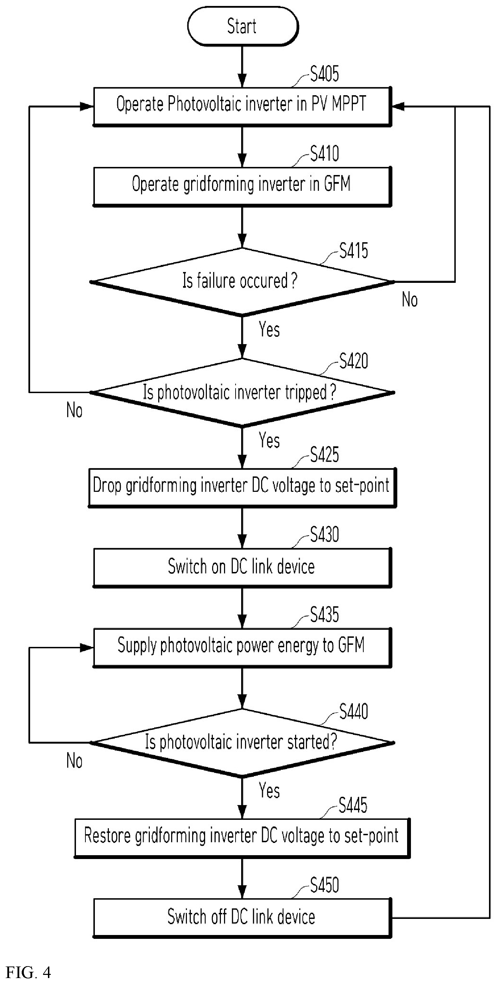

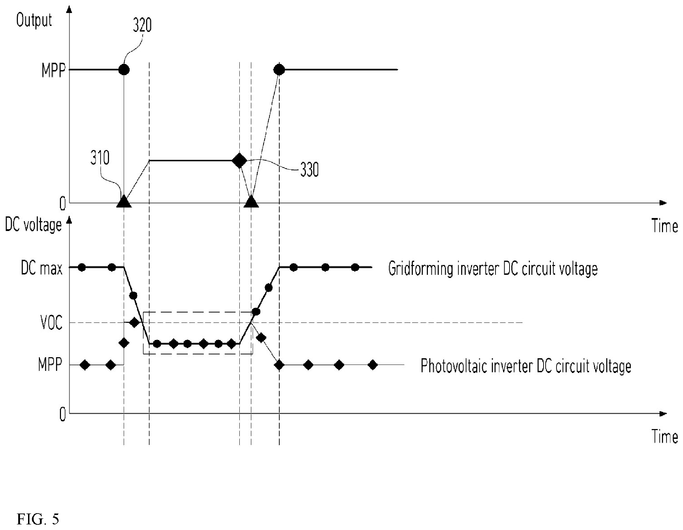

FIGS. 4 and 5 are diagrams for explaining a grid-forming type power curtailment control method according to a first embodiment of the present invention.

Referring to FIGS. 4 and 5, in step S405, the grid-forming type power curtailment control system operates through an MPPT algorithm according to the output characteristics of the PV power plant associated with the PV inverter (100).

In step S410, the grid-forming inverter (200), connected in parallel with the PV inverter (100) via the DC Link device (300), performs Grid-Forming (GFM) voltage source control at the normal DC voltage set point.

In step S415, the system determines whether a fault has occurred due to a grid disturbance.

In step S420, if a fault occurs due to grid disturbance, the system determines whether the PV inverter (100) has tripped from the power grid. Referring to FIG. 5, if the PV inverter (100) is tripped, the PV power plant transitions from the MPP (320) to zero output (310). At this time, the DC voltage of the PV inverter increases from the MPP DC voltage to the Voc (Open Circuit Voltage) state.

In step S425, if the PV inverter (100) is tripped due to a grid disturbance, the DC voltage of the grid-forming inverter (200) is lowered to a predetermined adjusted DC voltage set point. During normal operation, the DC voltage (normal DC voltage set point) of the grid-forming inverter (200) is maintained at a level higher (DC max) than the DC voltage of the PV inverter (100). The grid-forming inverter (200) can adjust the fluctuation of the DC voltage from time to time through voltage source control, i.e., grid-forming control, to maintain it near the normal DC voltage set point.

In step S430, the DC voltage of the grid-forming inverter (200) is lowered to a pre-configured adjusted DC voltage set point, whereby a switch of the DC Link device (300) connected to the DC output circuit of the PV power plant is turned on (conducted). Referring to FIG. 5, when the switch of the DC Link device (300) is turned on, the output of the PV power plant increases from zero output (310) to the output (330) of the grid-forming inverter (200).

In step S435, the grid-forming type power curtailment control system is connected to the PV power plant and controls the output of the PV power plant at the adjusted DC voltage set point. Referring to FIG. 5, in this case, the grid-forming inverter (200) is connected to the PV power plant and performs voltage source control at the adjusted DC voltage set point, so that the PV power plant can continue to provide an output (330 or 340) at a point deviating from the Maximum Power Point (MPP) (320).

In step S440, the grid-forming type power curtailment control system determines whether the PV inverter (100), which was previously disconnected from the grid, has been restarted.

In step S445, if the PV inverter (100) is restarted, the DC voltage of the grid-forming inverter (200) is restored to the previous normal DC voltage set point.

In step S450, as the DC voltage of the grid-forming inverter (200) is restored to the previous normal DC voltage set point, the switch of the DC Link device (300), which was in a conducting state, is turned off (opened).

When the switch of the DC Link device (300) is turned off, the grid-forming type power curtailment control system returns to step S405, and the PV inverter (100) operates at the MPP (320) according to the output characteristics of the PV power plant.

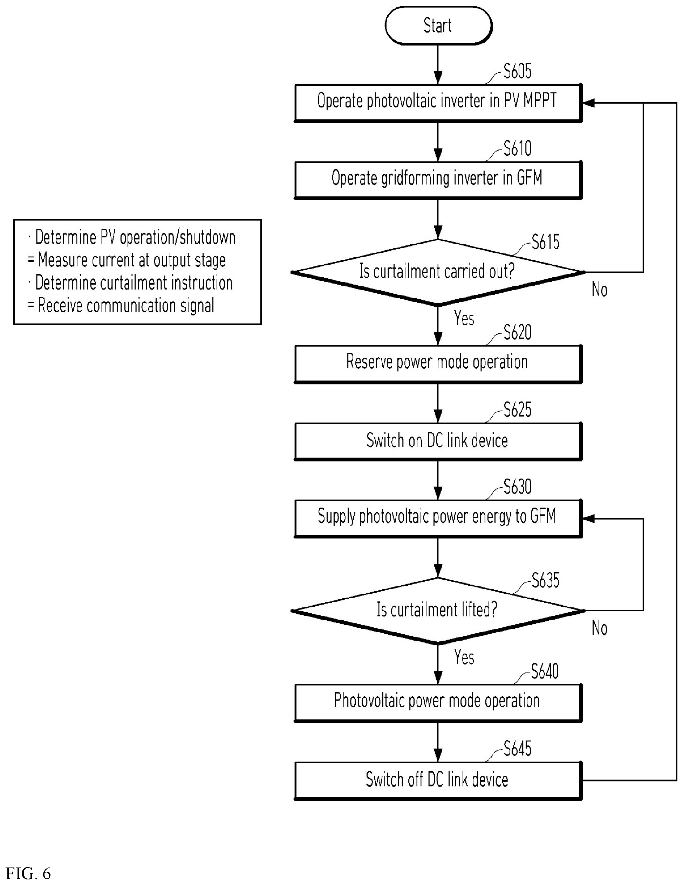

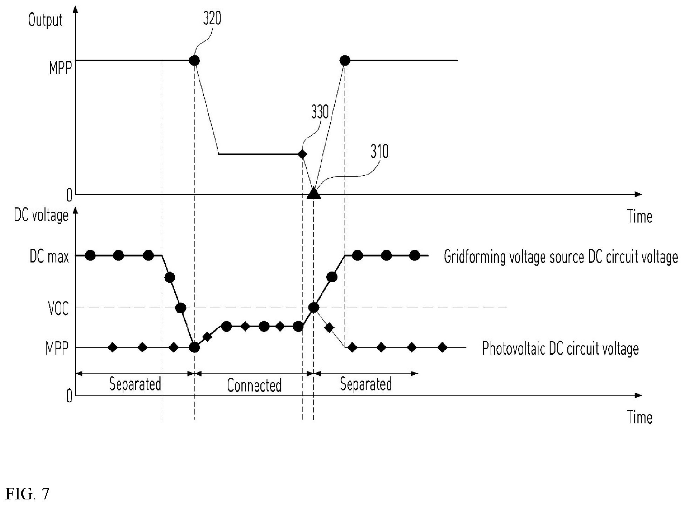

FIGS. 6 and 7 are diagrams for explaining a grid-forming type power curtailment control method according to a second embodiment of the present invention.

Referring to FIGS. 6 and 7, in step S605, the grid-forming type power curtailment control system operates through an MPPT algorithm according to the output characteristics of the PV power plant.

In step S610, the grid-forming inverter (200), connected in parallel with the PV inverter (100) via the DC Link device (300), performs GFM (Grid Forming Converter) voltage source control at a normal DC voltage set point (420).

In step S615, the grid-forming type power curtailment control system determines whether power curtailment is being implemented. Here, the determination of PV operation or stoppage is made by measuring the output terminal current of the PV power plant, and the determination of whether a power curtailment command has been received is made through the reception of a communication signal.

In step S620, if it is determined that power curtailment is being implemented, the DC voltage of the grid-forming inverter (200) is lowered to a pre-configured DC voltage set point. While the DC voltage (normal DC voltage set point) of the grid-forming inverter (200) is maintained at a level higher DC max than the DC voltage of the PV inverter (100) during normal conditions, it is lowered to the MPP DC voltage when power curtailment is implemented.

In step S625, the DC voltage of the grid-forming inverter (200) is lowered to the MPP DC voltage, whereby the switch of the DC Link device (300) connected to the DC output circuit of the PV power plant is turned on (conducted).

In step S630, the grid-forming inverter (200) is connected to the PV inverter (100) and controls the output of the PV power plant at the adjusted DC voltage set point. Referring to FIG. 7, in this case, the grid-forming inverter (200) is connected to the PV inverter (100) and performs voltage source control at the adjusted DC voltage set point, so that the PV power plant can continue to provide an output (330 or 340) at a point deviating from the MPP (320).

In step S635, it is determined whether the power curtailment has been released.

In step S640, if the power curtailment is released, the DC voltage of the grid-forming inverter (200) is restored to the previous normal DC voltage set point.

In step S645, as the DC voltage of the grid-forming inverter (200) is restored to the previous normal DC voltage set point, the switch of the DC Link device (300) is turned off (opened). When the switch of the DC Link device (300) is turned off, the output of the PV power plant drops to a zero state (310), and then the PV inverter (100) immediately operates at the MPP (320) according to the output characteristics of the PV power plant.

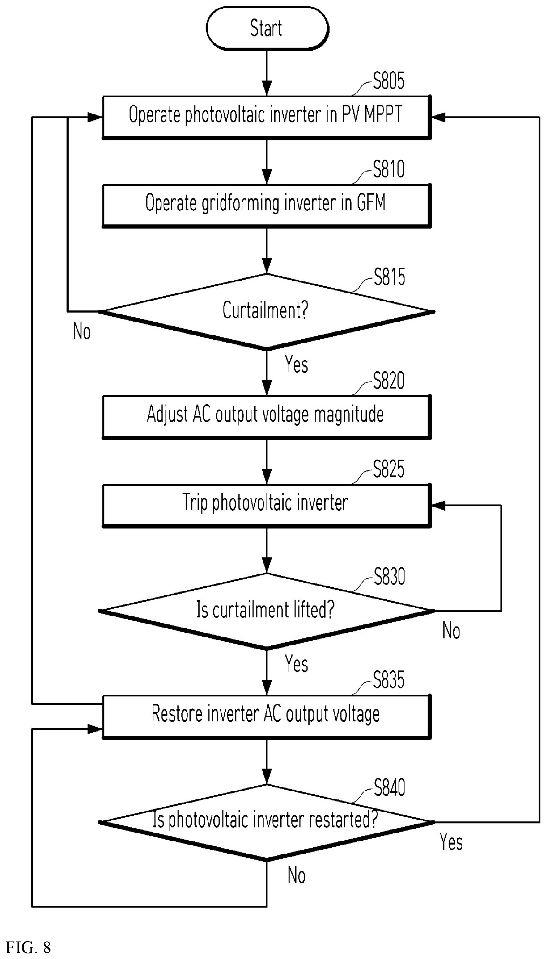

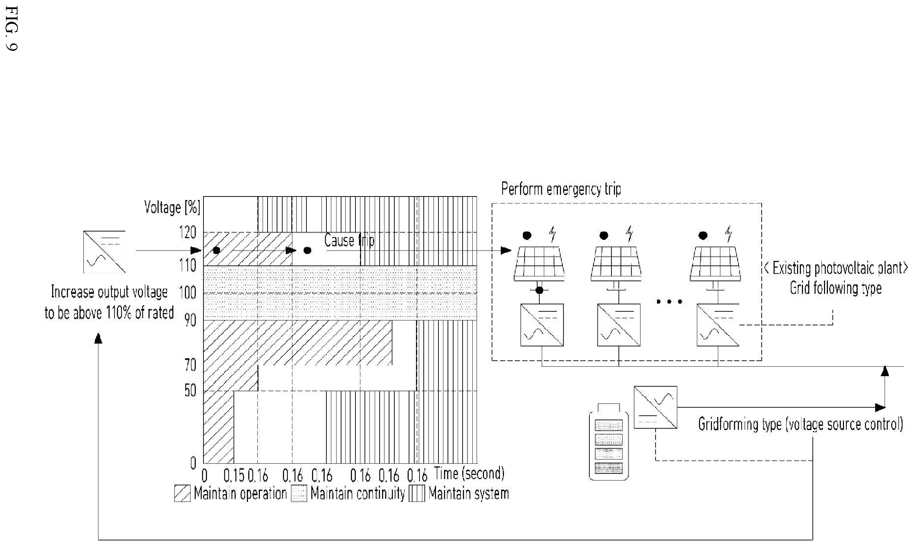

FIGS. 8 and 9 are views for explaining a grid-forming power curtailment control method according to a third embodiment of the present invention.

Referring to FIGS. 8 and 9, in step S805, the grid-forming power curtailment control system operates a photovoltaic (PV) inverter (100) through a Maximum Power Point Tracking (MPPT) algorithm (320) according to the output characteristics of a photovoltaic power plant.

In step S810, the grid-forming power curtailment control system performs voltage source control of a grid-forming (GFM) inverter (200) (Grid-Forming Converter). Here, the grid-forming inverter (200) is connected to a power grid and is not connected to the PV inverter (100) via a DC Link device (300).

In step S815, the grid-forming power curtailment control system determines whether power curtailment is being implemented. The grid-forming power curtailment control system according to the present invention may require urgent and large-scale power curtailment when grid stability becomes insufficient. In this case, the grid-forming power curtailment control system may determine whether to curtail power through the reception of communication signals.

In step S820, as a result of the determination, if power curtailment is implemented, the grid-forming power curtailment control system adjusts the AC output voltage of the grid-forming inverter (200) to be equal to or higher than an over-voltage relay (OVR) trip setting value of the PV inverter (100). Here, the OVR trip setting value of the PV inverter (100) may be 110% of the rated AC output voltage.

Referring to FIG. 9, the grid-forming power curtailment control system can promote stabilization by increasing the AC output voltage during emergency power curtailment to perform a trip of the PV inverter. Here, the time for increasing the AC output voltage may be within 0.5 to 1 second according to a Ride-Through graph.

In step S825, when the grid-forming power curtailment control system performs voltage source control in which the grid-forming inverter (200) adjusts the normal output voltage to the grid to be equal to or higher than the OVR trip setting value of the PV inverter (100), the PV inverter (100) is disconnected (tripped) from the power grid due to a grid disturbance.

In step S830, the grid-forming power curtailment control system determines whether the power curtailment has been released.

In step S835, if the power curtailment is released, the grid-forming power curtailment control system readjusts the grid-forming inverter (200) to a normal output voltage toward the power grid.

In step S840, the grid-forming power curtailment control system determines whether the PV inverter (100), which was disconnected from the power grid, is restarted.

Thereafter, if the PV inverter (100) is restarted, the grid-forming power curtailment control system returns to step S805, and the PV inverter is operated at the maximum power point (320) according to the output characteristics of the PV power plant.

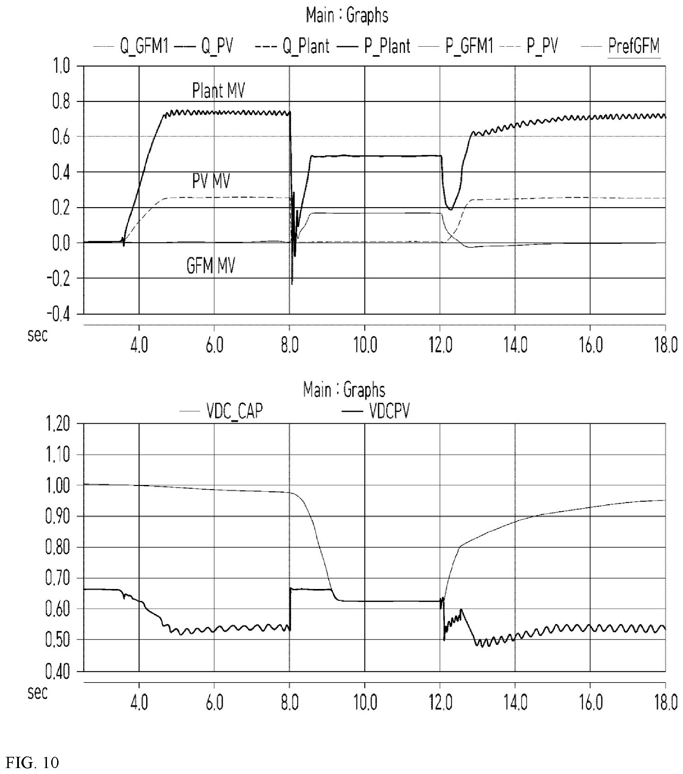

FIG. 10 is a view for explaining simulation results of a grid-forming power curtailment control system according to a first embodiment of the present invention.

The upper graph of FIG. 10 is a simulation view of the output of the PV power plant (Plant MW), the output of the PV panels (PV MW), and the output of the grid-forming inverter (200) (GFM MW). The PV power plant is composed of a plurality of PV panels, and its output is equal to the sum of the outputs of the plurality of PV panels (PV MW). In the simulation results, the PV power plant outputs 0.75 MW through MPPT control. Thereafter, at 8.0 seconds, if the PV inverter (100) is tripped by the grid-forming power curtailment control system, the output of the PV power plant becomes 0 MW; however, since the PV panels and the grid-forming inverter (200) are connected through the DC Link device (300), the PV power plant can still output 0.47 MW of power.

In this case, the output of the PV power plant (Plant MW) is equal to the sum of the outputs of the plurality of grid-forming inverters (GFM MW) as they are connected to the grid-forming inverters (200) after the PV inverters (100) are tripped. Since the PV power is output through the grid-forming inverter (200) when the PV inverter (100) is tripped, the system prevents the previous output of 0.75 MW from dropping to 0 MW and instead outputs 0.47 MW, which is approximately 63% of the previous output. Thus, energy from the PV power plant can be continuously supplied to the power grid even when conventional PV inverters are disconnected from the power system during a grid disturbance. Subsequently, when the PV inverter is restarted at 12.0 seconds, it outputs 0.75 MW again through MPPT control.

The lower graph of FIG. 10 is a simulation view of the DC voltage of the PV panels (PV DCV) and the DC voltage of the grid-forming inverter (GFM DCV). The DC voltage of the PV panels (PV DCV) is maintained at approximately 0.53 kV through MPPT control in the simulation results. The DC voltage of the grid-forming inverter (GFM DCV) is maintained at approximately 1.00 kV, which is a pre-set normal voltage setpoint. Thereafter, at 8.0 seconds, when the PV inverter is tripped, the DC voltage of the grid-forming inverter (GFM DCV) is reduced to a regulated DC voltage setpoint until the DC Link device (300) is conducted. After 12.0 seconds, when the PV inverter is restarted, the DC voltage of the grid-forming inverter (GFM DCV) is restored to the normal voltage setpoint of approximately 1.00 kV.

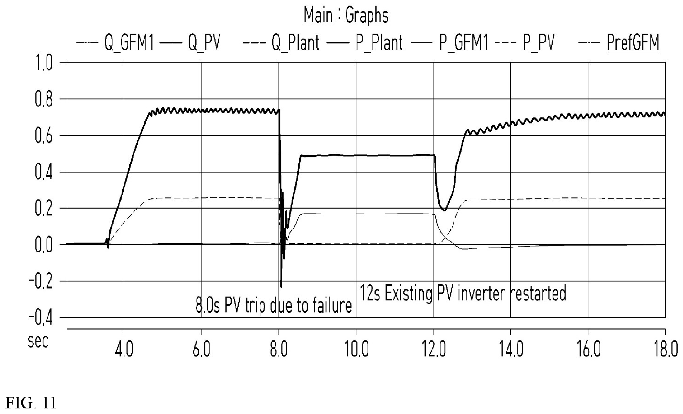

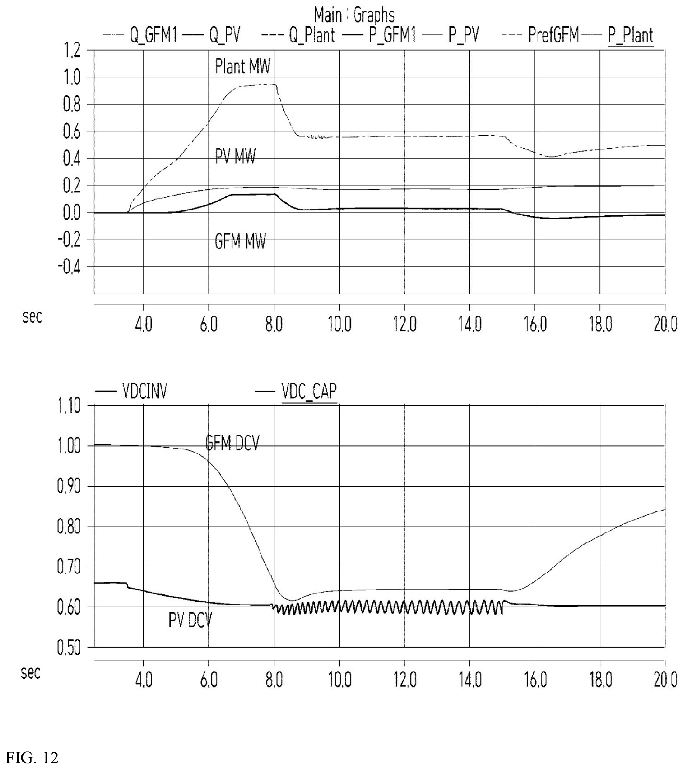

FIGS. 11 and 12 are views for explaining simulation results of a grid-forming power curtailment control system according to a second embodiment of the present invention.

The upper graph of FIG. 11 is a simulation view of the output of the PV power plant (Plant MW), the output of the PV panels (PV MW), and the output of the grid-forming inverter (GFM MW). The PV power plant is composed of a plurality of PV panels, and its output is equal to the sum of the outputs of the plurality of PV panels (PV MW). In the simulation results, the PV power plant outputs approximately 0.95 MW through MPPT control. Thereafter, at 8.0 seconds, when a power curtailment command is received from the outside, the PV inverter (100) and the grid-forming inverter (200) are operated at a point deviating from the maximum power point through DC linkage, thereby reducing the output of the PV power plant to approximately 0.6 MW. In this case, since the PV panels are connected to both the PV inverter (100) and the grid-forming inverter (200), the output of the PV power plant (Plant MW) is equal to the sum of the outputs of the corresponding plurality of PV panels (PV MW) and the corresponding plurality of grid-forming inverters (GFM MW).

FIG. 12 is an enlarged view showing only the output portion of the PV panels in the upper graph of FIG. 11. Referring to FIG. 12, the PV panels output 0.18 MW through the PV inverter (100) via MPPT control. After 7.5 seconds, when the grid-forming inverter (200) is connected by an external power curtailment command, the PV panels output 0.13 MW through the PV inverter (100), resulting in a power reduction of approximately 28%. After 15 seconds, when the power curtailment command is released, the output is restored to its original state.

Referring back to FIG. 11, the lower graph of FIG. 11 is a simulation view of the DC voltage of the PV panels (PV DCV) and the DC voltage of the grid-forming inverter (GFM DCV). The DC voltage of the grid-forming inverter (GFM DCV) is maintained at approximately 1.00 kV, which is a pre-set normal voltage setpoint. After 8.0 seconds, when an external power curtailment command is received, the DC voltage of the grid-forming inverter (GFM DCV) is strengthened (increased) to a power curtailment DC voltage setpoint until the DC Link device (300) is conducted.

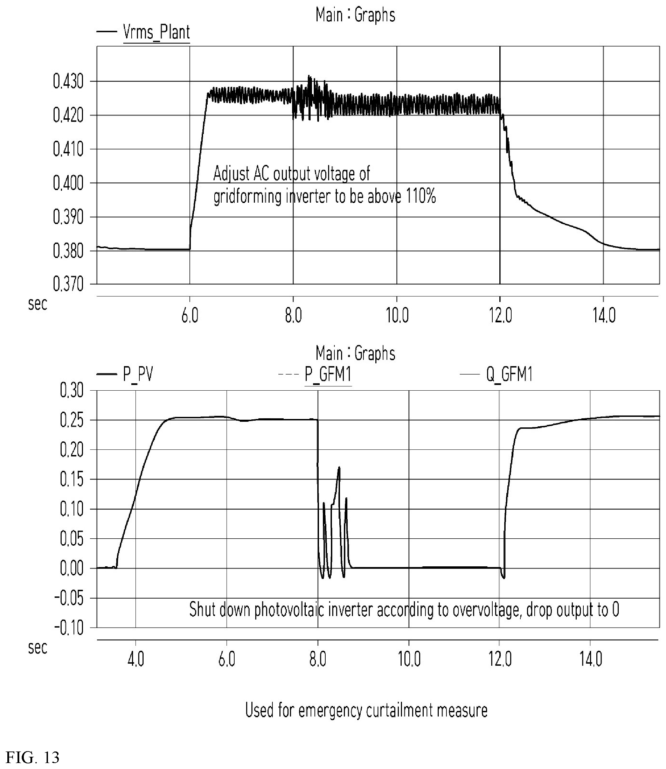

FIG. 13 is a view for explaining simulation results of a grid-forming power curtailment control method according to a third embodiment of the present invention.

The upper graph of FIG. 13 is a simulation view of the AC output of the grid-forming inverter (200). In the third embodiment of the present invention, when an emergency power curtailment command is received from the outside at 6.0 seconds, the grid-forming inverter (200) adjusts the AC output to be equal to or higher than the OVR trip setting value of the PV inverter connected to the PV panels. Here, the OVR trip setting value may be, for example, 110% of the rated AC output of the PV inverter. In the third embodiment, the grid-forming inverter (200) is separated and not connected to the PV panels via the DC Link device (300).

The lower graph of FIG. 13 is a simulation view of the output (P_PV) of the PV inverter (100). The output of the PV inverter (100) is disconnected (tripped) from the power grid due to the over-voltage, and the output (P_PV) of the PV inverter (100) drops to zero.

The description of the presented embodiments is provided to enable any person skilled in the art to which the present invention pertains to use or implement the present invention. Various modifications to these embodiments will be apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. A grid-forming type curtailment control system, comprising:
• a photovoltaic inverter (100) configured to convert direct current (DC) electricity generated by a photovoltaic panel into alternating current (AC) electricity; and
• a grid-forming inverter (200) linked in parallel with the photovoltaic inverter (100) and configured to perform voltage source control on a power grid.

2. The system according to claim 1, further comprising a DC link device (300) connecting the photovoltaic inverter (100) and the grid-forming inverter (200),
wherein the DC link device (300) is configured to:
• open a switch to disconnect the photovoltaic inverter (100) from the grid-forming inverter (200) when a DC voltage of the grid-forming inverter (200) is higher than a DC voltage of the photovoltaic inverter (100); and
• close the switch to connect the photovoltaic inverter (100) to the grid-forming inverter (200) when the DC voltage of the grid-forming inverter (200) is lower than the DC voltage of the photovoltaic inverter (100).

3. The system according to claim 1, further comprising an energy storage device (400) connected to the grid-forming inverter (200) and configured to release stored energy through the grid-forming inverter (200) when a disturbance occurs in the power grid.

4. The system according to claim 1, wherein the grid-forming inverter (200) comprises:
• a grid-forming communication unit (210) configured to receive a power system trip signal of the photovoltaic inverter (100) due to a power grid disturbance or a curtailment command of photovoltaic power generation ; and
• a grid-forming control unit (220) configured to perform control corresponding thereto when the power system trip signal or the curtailment command is received,

5. The system according to claim 4, wherein the grid-forming control unit (220) is configured to, upon receiving the power system trip signal of the photovoltaic inverter (100) due to a power grid disturbance, control the output of the photovoltaic panel at a predetermined DC voltage set point (330, 340) through a DC link with the photovoltaic panel .

6. The system according to claim 4, wherein the grid-forming control unit (220) is configured to, upon receiving a power curtailment command for the PV power plant from an external source, control the output of the photovoltaic panel at a point deviating from a maximum power point (320) through a DC link with the photovoltaic panel.

7. The system according to claim 4, wherein the grid-forming control unit (220) is configured to, upon receiving an urgent curtailment command or determining that curtailment is required for system stabilization, increase an AC output voltage at a connection point with the power grid to trip the PV inverter (100) from the power system.

8. A grid-forming type curtailment control method performed in a grid-forming type curtailment control system comprising a photovoltaic inverter (100) that converts direct current (DC) electricity generated by a photovoltaic panel into alternating current (AC) electricity and a grid-forming inverter (200) linked in parallel with the photovoltaic inverter (100) to perform voltage source control on a power grid, the method comprising:
• receiving (S405, S815), by the grid-forming inverter (200), a power system trip signal of the photovoltaic inverter (100) due to a power grid disturbance or a power curtailment command for the PV power generation; and
• performing (S425, S820), upon receiving the power system trip signal or the curtailment command, control corresponding thereto.

9. The grid-forming power curtailment control method according to claim 8, further comprising:
• a step of **connecting** the Photovoltaic inverter and the grid-forming inverter by **turning on a switch** of a DC coupling device, provided that a DC voltage of the grid-forming inverter is lower than a DC voltage of the Photovoltaic inverter; and
• a step of controlling an output of a PV power plant at a predetermined DC voltage set point by DC-coupling the grid-forming inverter with the photovoltaic panel.

10. The grid-forming power curtailment control method according to claim 8, further comprising:
• a step of receiving a power curtailment command for pv power generation; and
• a step of tripping the Photovoltaic inverter from a power system by increasing an AC output voltage to a power grid, by the grid-forming inverter, in case of receiving the power curtailment command for the pv power generation.
